# EUROPEAN PATENT APPLICATION

(11) **EP 4 811 283 A1**
(43) Date of publication of application: **23.09.2026**
(21) Application number: 25179122.4
(22) Date of filing: 27.05.2025
(51) Int. Cl.: G06T 7/11, G06T 7/12, G06T 7/187, G06T 7/00

(54) **IMAGE IDENTIFYING SYSTEM AND METHOD**

(30) Priority: 17.03.2025 TW 114109785
(71) Applicant: Heron Neutron Medical Corp., Zhubei City, Hsinchu County (TW)
(72) Inventor: CHENG, Hsin-Tien, Zhubei City, Hsinchu County (TW)
(74) Representative: Patentship Patentanwaltsgesellschaft mbH

(57) **Abstract**

The present invention provides an image identifying system (100) and method, including an anatomical image module (110), a contour module (120), a pixel value module (130), and a recognition analysis module (140). The anatomical image module (110) reads anatomical images. The contour module (120) recognizes the body contour based on the anatomical images. The pixel value module (130) sets the first pixel value and the second pixel value, which correspond and filter the first pixel region (620) and the second pixel region (630) within the body contour, respectively. The recognition analysis module (140) expands the first pixel region (620) and the second pixel region (630) outward by a voxel range to form a first expanded region (640) and a second expanded region (650). The first expanded region (640) is then adjusted by excluding the area of overlap between the first expanded region (640) and the second expanded region (650) to form a preprocessing region.

## Description

### TECHNICAL FIELD OF THE INVENTION

The present invention relates to an image identifying system and method. More specifically, it is an image identifying system and method that enhances the identification and marking of mucosal tissue and soft tissue in anatomical images via image-processing techniques.

### BACKGROUND OF THE INVENTION

Boron Neutron Capture Therapy (BNCT) is an innovative radiation therapy for cancer by boron-containing drugs (such as amino acids serving as carriers for the boron element), these drugs are designed to selectively accumulate in the tumor cells of patients with minimal absorption in normal cells. After the patient is exposed to an epithermal neutron beam, the tumor cells that have accumulated the boron-containing drug are more likely to absorb the neutrons than normal healthy cells, consequently, a nuclear reaction occurs when the neutrons interact with the boron-containing drugs, producing lithium nuclei (⁷Li) and alpha particles. The generated alpha particles and lithium nuclei (⁷Li) atoms have an extremely short range (about 5-9 micrometers) and can destroy tumor cells. This range is roughly equal to the diameter of a cell, allowing the energy to be concentrated within the tumor cells, causing minimal damage to the surrounding healthy tissues. Therefore, BNCT treatment offers advantages such as high selectivity for tumor sites, low toxicity, fewer treatment sessions compared to traditional radiation therapy, less burden on the body, and a faster recovery period.

For traditional radiology or the aforementioned Boron Neutron Capture Therapy (BNCT), the use of medical imaging is crucial, as it aids in accurately locating the tumor sites in patients, protecting healthy tissues during the treatment process, evaluating the treatment efficacy, and contributing to the development of new medical tools in the field of medical engineering. Currently, medical imaging is mainly categorized into anatomical imaging (such as computed tomography (CT) and magnetic resonance imaging (MRI), which provide information about the physical geometric structure) and functional imaging (such as positron emission tomography (PET), gamma scintigraphy, and single-photon emission computed tomography (SPECT), which provide information about the distribution of substances like targeted drugs or other labeled compound in the body). In traditional techniques, computed tomography (CT) imaging is typically used as anatomical imaging to assess the location of lesions within the patient's body, including the distribution of organs, tissues, tumors, bones, mucosa, and air. Medical professionals often employ image-processing techniques to automatically or manually annotate regions of interest (ROI) in the images, providing the necessary input data for treatment planning simulations. This includes parameters such as the CT number represented in Hounsfield units, tissue composition, and density, which are used to further calculate the dose distribution for the patient during actual treatment.

For example, a Chinese patent CN101458826B filed in 2008, disclosed a digital human body modeling method for analyzing the density and composition data based on CT numbers through anatomical imaging techniques. The method disclosed in patent '826 includes several steps: First, collecting the image data in CT images format and color photographs format. Second, the outer contours of each organ and tissue are manually labeled on the color photographs by different colors in order to obtain the geometric information such as the shape, size, and position of each organ and tissue. Then, the image registration of CT images and color photographs is made. Based on the outer contours of the organs and tissues segmented on the color photographs, the corresponding outer contour information of the organs and tissues on the CT images is obtained. After that, the composition of unknown voxels is calculated by linear interpolation based on the well-known CT values, density, and composition of adjacent voxels. Finally, based on the obtained density and composition information, a data input file is generated, wherein the data input file meets the requirements for radiation dose calculation in order to perform the subsequent simulation calculations.

However, there are several disadvantages exist in the traditional anatomical image-processing techniques as follows: 1. The manual label of the region of interest (ROI) on CT images by different medical professionals is often influenced by their prior knowledge and subjective judgment, leading to inconsistencies results and errors. 2. It may have limitations of lacking comprehensive biological information solely by anatomical imaging. 3.The mucosal region or soft tissue is often difficult to assess solely through functional imaging, currently, there lack of method to define the regions mentioned above by using the clear and well-defined parameters. (Due to the fragility of the mucosal or soft tissue regions, the radiation dose used in X-ray exposure is limited during the imaging process, resulting in lower resolution, which makes it difficult to directly analyze through manual or automated methods.) Therefore, to address the aforementioned issues in the art of radiology, especially in the boron neutron capture therapy field, it is still necessary to require an image identifying system and method that can effectively improve the accuracy and consistency of image analysis, as well as enhance the scientific and reliable nature of treatment planning.

### BRIEF SUMMARY OF THE INVENTION

Due to the aforementioned reasons, the main object of the present invention is to provide a novel image identifying system and method based on anatomical imaging (such as CT imaging). The present invention proposes a clear, well-defined parameter setting to identify organs, tissues, tumors, bones, mucosal regions, and air, wherein the parameters align with human anatomical structures, making the output result meet the requirements of treatment more accurate and precise compare to the prior art. Another object of the present invention is to improve the traditional anatomical imaging interpretation process through an automated analysis system which address the issues that the analysis and interpretation of the anatomical imaging must be manually determined by skilled medical workers or medical personnel, as well as the limited photon dose exposure during anatomical imaging, which results in poor automated interpretation. Therefore, the disadvantage of human error and the lack of objective, unified standards for analysis and interpretation could have the overcome. A further object of the present invention is to enhance the accuracy, precision and applicability of treatment planning by performing image registration between functional imaging and anatomical imaging, compensating the resolution limitations of anatomical imaging in tissue. In summary, a detailed technical solution of the invention is provided in the following description.

Accordingly, the present invention provides an image identifying system, comprising an anatomical image module, a contour module, a pixel value module, and a recognition analysis module. The anatomical image module reads anatomical images. The contour module recognizes the body contour based on the anatomical images. The pixel value module sets the first pixel value and the second pixel value, which correspond to and filter out the first pixel region and the second pixel region within the human body contour, respectively. The recognition analysis module is connected to the pixel value module. The recognition analysis module expands the first pixel region and the second pixel region outward within a voxel range, forming a first expanded region and a second expanded region, and subtracting the intersection between the first expanded region and the second expanded region to form a preprocessing region. Additionally, the pixel value module sets a mucosal pixel value, allowing the recognition analysis module to recognize the mucosal region within the preprocessing region based on the mucosal pixel value and output the recognition result, wherein the voxel range is between 0.2mm and 10mm.

Accordingly, the present invention provides a novel image identifying method, comprising the following steps. An anatomical image is prepared. The body contour is recognized by a contour module based on the anatomical image. The first pixel region and the second pixel region within the body contour are set via a pixel value module based on the first pixel value and the second pixel value. The recognition analysis module expands the first pixel region and the second pixel region outward within at least one voxel range, forming the first expanded region and the second expanded region. The intersection between the first expanded region and the second expanded region is subtracted by the first expanded region, and the remaining subtracted area is defined as a preprocessing region. The mucosal pixel value range is set to process the preprocessing region, thereby recognizing the mucosal region in the anatomical image. The voxel range is between 0.2mm and 10mm.

According to an embodiment of the present invention, the setting of the first pixel value and the second pixel value can be selected according to the needs of the application, allowing any region such as organs, tissues, tumors, bones, air, etc., to be defined. In the aforementioned embodiment, for example, the first pixel region is defined based on the location of the air, and the second pixel region is defined based on the location of the bones, as an instance for illustration.

### BRIEF DESCRIPTION OF THE DRAWINGS

The present invention can be more fully understood by reading the subsequent detailed description and examples with references made to the accompanying drawings, wherein:
FIG. 1 shows the system architecture of the image identifying system;
FIG. 2A shows the detailed system architecture of the recognition analysis module;
FIG. 2B further explains one system implementation architecture in which the intelligent module is integrated with the image identifying system;
FIG. 3 shows the architecture of the image identifying method;
FIG. 4 shows the detailed sub-architecture of the image identifying method;
FIG. 5 shows another detailed sub-architecture of the image identifying method;
FIG. 6 shows the identifying results of the mucosal region in an embodiment of the present invention by anatomical imaging (explained with a CT image);
FIG. 7 shows the image identifying process in an embodiment of the present invention;
FIG. 8 shows the sources of anatomical imaging (explained with a CT image) and functional imaging (explained with a PET image) during image registration in an embodiment of the present invention, where it is clearly observed that the resolution of the functional imaging is lower than that of the anatomical imaging

### DETAILED DESCRIPTION OF THE INVENTION

This invention will be described in detail with better embodiments and perspectives to allow readers to fully understand the implementation methods of these embodiments. However, those skilled in the art should understand that the invention can also be practiced without these specific details. In addition, the present invention can also be applied and implemented through other specific embodiments. The details outlined in this specification can be applied based on different needs, and various modifications or changes can be made. Therefore, the invention will be described with better embodiments and perspectives. Such descriptions are intended to explain the structure of the invention and are for illustrative purposes only, not meant to limit the scope of the patent application. The terms used in the following description will be interpreted in the broadest reasonable manner. Those skilled in the art can adjust the structure of the invention according to the needs of manufacturing or therapeutic applications to meet the practical industrial demands, as outlined above.

The terms "about," "approximately," or "substantially" used in this invention generally refer to within twenty percent of a given value or range, preferably within ten percent, and more preferably within five percent. The values provided here are approximate, meaning that unless explicitly stated, the terms "about," "approximately," or "substantially" can be inferred. Additionally, the directional terms used in this invention, such as "front and back," "left and right," or "up and down," should be understood in conjunction with the accompanying illustrations. Unless otherwise specified, the meaning of these terms can be inferred from the context of the description when read in its entirety. Finally, in order to simplify the illustrations, some well-known structures and components will be depicted in a simplified manner, and for better viewing, the sizes of the components in the illustrations are not drawn to scale. Additionally, in the description of the present invention, the method procedure numbers, are merely procedural numbers for a particular method step unless explicitly stated. These step numbers are provided solely for clarity and convenience in explanation and do not indicate the order of precedence of execution within the method flow. This clarification is hereby stated in advance.

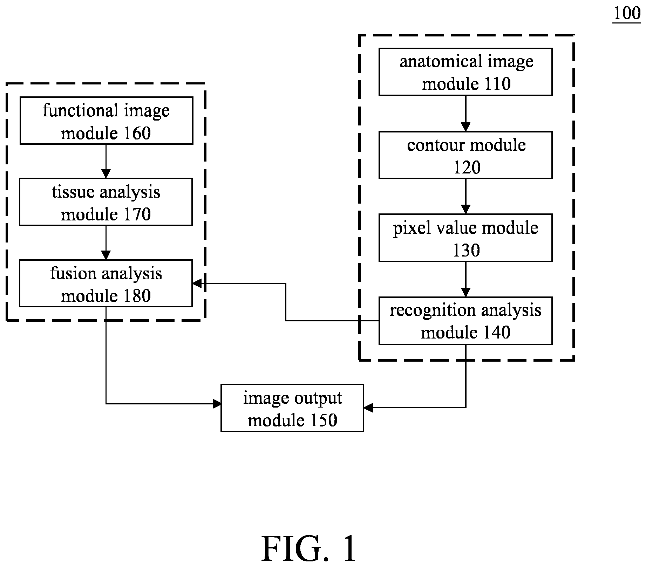

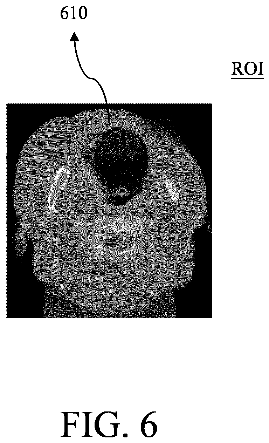

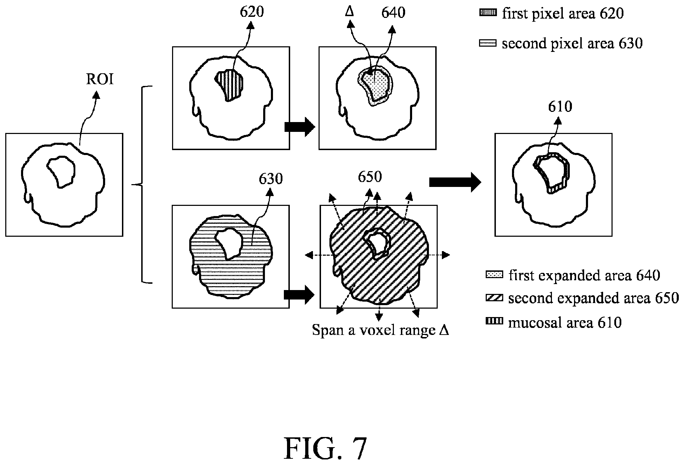

Please refer to FIG. 1, 6, and 7. The present invention provides an image identifying system 100, which includes an anatomical image module 110, a contour module 120, a pixel value module 130, and a recognition analysis module 140. The anatomical image module 110 reads anatomical images. The contour module 120 recognizes the body contour based on the anatomical image. The pixel value module 130 sets the first pixel value and the second pixel value, which correspond to the first pixel area 620 and the second pixel area 630 selected from the body contour, respectively. The recognition analysis module 140 is connected to the pixel value module 130. The recognition analysis module 140 expands the first pixel area 620 and the second pixel area 630 outward by a voxel range Δ to form a first expanded area 640 and a second expanded area 650. Further, the recognition analysis module 140 subtracts the intersection area of the first expanded area 640 and the second expanded area 650 by the first expanded area 640, wherein the pixel value module 130 sets a mucosal pixel value, so that the recognition analysis module 140 can recognize the mucosal area 610 in the pre-processing region based on the mucosal pixel value, and output the recognition result. In addition, the voxel range Δ is between 0.2mm and 10mm. Please refer to both FIG. 1 and FIG. 6, it takes oral mucosa as an example of the application of the image identifying system 100. In the aforementioned embodiment, the voxel range Δ can be set between 0.2mm and 4mm. From an anatomical perspective, the oral mucosa is located between the oral cavity and the lining of the nasal cavity. Therefore, the target of the image identifying system 100 is to output the recognition result of the oral mucosa in the anatomical image, specifically from the nasal cavity to the epiglottis region (where computed tomography (CT) images are used as one embodiment of the anatomical image in this example). It should be noted that, according to an embodiment of the present invention, the setting of the first pixel value and the second pixel value can be selected according to the needs of the application, allowing for the definition of any desired region such as organs, tissues, tumors, bones, air, etc. In the aforementioned embodiment, air is selected for defining the first pixel area, while bones are selected for defining the second pixel area.

Accordingly, the anatomical image module 110 reads an anatomical image, said anatomical image is synthesized from X-ray optical slices taken at various angles, and transmits the anatomical image to the contour module 120. The contour module 120 recognizes the body contour based on the anatomical image file, which serves as a medically meaningful region of interest (ROI). Next, the pixel value module 130 sets the first pixel value and the second pixel value. In one embodiment of the present invention, the pixel values in the region of interest (ROI) are represented by CT values in Hounsfield units (Naturally, different types of anatomical images, such as those from magnetic resonance imaging (MRI) techniques, may also use commonly used pixel values in the medical field, or values defined based on specific needs in other embodiments). In this embodiment, the first pixel value and the second pixel value correspond to the first pixel area 620 and the second pixel area 630, respectively, which are selected from the body contour to filter out the regions in the anatomical image where air and bone are present. Accordingly, resulting from the setting results of the first pixel area 620 and the second pixel area 630, the recognition analysis module 140 expands them outward by a voxel range Δ, wherein the voxel range Δ can be defined according to the needs of the application. In typical embodiments, such as the recognition of the mucosal area 610 in oral mucosa, the voxel range Δ can be set between 0.2mm and 4mm to form the first expanded area 640 and the second expanded area 650 after expansion, and subtract the intersection area of the first expanded area 640 and the second expanded area 650 from the first expanded area 640. In addition, the pixel value module 130 sets a mucosal pixel value, thereby the recognition analysis module 140 can recognize the mucosal area 610 in the pre-processing region based on the mucosal pixel value and output the recognition result. According to one aspect of the present invention, the voxel range Δ for the mucosal area 610 can be defined according to the specific area required by the application. In the embodiment mentioned above, for oral mucosa applications in oral medicine, the thickness of the hard palate is typically thicker, also, considering the presence of other biological tissues in the oral mucosal area, such as the buccal mucosa and the dorsal surface of the tongue, the voxel range of 0.2mm-4mm is an optimal parameter setting for processing the oral mucosa, such well-defined and clear parameter setting achieves the object of standardization and automated processing as proposed in the present invention. According to another aspect of the present invention, since oral mucosa is used as the application for the image identifying system 100, during the formation process of the first expanded area 640, the location of the sinus may be misjudged by the image identifying system 100 due to the expansion of the first expanded area 640. Therefore, in the subsequent processing steps, subtracting the intersection area between the first expanded area 640 and the second expanded area 650 can filter out the sinus region to prevent the misjudgment, ensuring that the operation mechanism of the image identifying system 100 acting in more concert with anatomical principles. Additionally, it should be noted that the range of 0.2mm-4mm mentioned above is merely one of many embodiments for illustrating the method of calibrating the oral mucosa in the present invention. Should the label of other mucosal tissues be required, such as intestine, stomach, uterus, foreskin, respiratory tract, vagina, conjunctiva, etc., the appropriate range can be defined based on the needs of practical anatomical structure. Typically, the voxel range Δ for the overall system application can be selected within the range of 0.2mm-10mm to accommodate different embodiments. Those skilled in the art, upon reading the description of the present invention, can modify the system based on conventional knowledge.

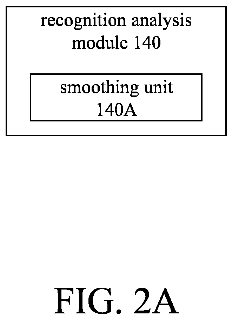

Please refer to FIG. 2A and 6. According to one embodiment of the present invention, the recognition analysis module 140 further includes a smoothing unit 140A. When the mucosal area 610 is generated within the region of interest (ROI), the smoothing unit 140 applies a smoothing algorithm to smooth the edges of the mucosal area 610 and perform denoising to eliminate the jagged edges of the mucosal area 610 in the image. The smoothing algorithm employed by the smoothing unit 140A can be selected from, but is not limited to, Gaussian blur, bilateral filter, mean filter, median filter, guided filter, non-local means (NLM), anisotropic diffusion (Perona-Malik filter), curvature-driven diffusion (CDD), and other smoothing algorithms. The selection of the smoothing algorithm can be based on factors such as computational resources, computation time, whether real-time computation is required, the level of image detail to be preserved, and the quality of denoising.

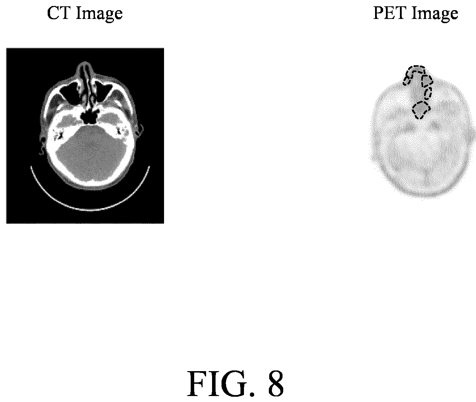

Please refer to FIG. 1 and 8. According to one embodiment of the present invention, the image identifying system 100 further includes a functional image module 160, a tissue analysis module 170, and a fusion analysis module 180. The functional image module 160 reads functional images. The tissue analysis module 170 recognizes and labels the mucosal position 660 in the functional image by the image-visible tumor volume (gross tumor volume, GTV) and standardized uptake value (SUV). The fusion analysis module 180 is coupled with the recognition analysis module 140, making the registration of the functional image and the anatomical image. In the embodiment, the union of the mucosal area 610 and the mucosal position 660 is made, forming and outputting the labeled result. Take the positron emission tomography (PET) images (hereinafter referred to as PET images) of functional images as an instance in one embodiment of the present invention described below, wherein one should notice that the specific source of the functional image may include, but is not limited to, positron emission tomography, gamma scintillation detectors, or single-photon emission computed tomography (SPECT). According to one aspect of the present invention, since PET images are used to locate lesions through the ingest isotopes by patient, the principle of PET images refer to the period of beta decay process within the isotope, the detector detects positrons released from the beta decay, which combine with surrounding electrons to produce an annihilation reaction. This results in the emission of photons that pinpoint the location of the lesion (i.e., the lesion site, such as a tumor). Since isotopic labeled compound accumulate in specific marked locations or areas with high blood flow and metabolism provided better resolution for marking the position of the mucosa or soft tissues within the region of interest (ROI). Therefore, by taking the union of the mucosal position 660 in the functional image and the mucosal area 610 marked in the anatomical image, the position of the mucosa can be more accurately recognized, achieving the goal of the present invention through the registration of functional and anatomical images, resulting to the improvement of the tissue resolution.

According to one embodiment of the present invention, the tissue analysis module 170 recognizes and labels the mucosal position 660 in the functional image by using the image-visible tumor volume (gross tumor volume, GTV) and standardized uptake value (SUV). The specific operation method of the mucosal position 660 recognition involves subtracting the region of the visible tumor volume from the area in the functional image where the standardized uptake value approximates the tumor tissue. According to one aspect of the present invention and relevant medical knowledge, in functional images, such as the PET images used in this embodiment, the standardized uptake value typically approximates the tumor tissue (tumor-to-normal tissue ratio, T/N ratio). For example, if the current T/N ratio is assumed to be 2.5, in this embodiment, the region with a standardized uptake value greater than or equal to 2.5 is extracted, and after subtracting the visible tumor volume, the mucosal position 660 can be obtained in the functional image. Likewise, it should be noted that the aforementioned T/N value of 2.5 is merely an example parameter and is not intended to limit the selection of the T/N value. Other parts of the human body, such as the intestines, stomach, uterus, foreskin, respiratory tract, vagina, conjunctiva, etc., may be modified or adjusted by those skilled in the art based on common medical knowledge after reading the description of the present invention, so that the tissue analysis module 170 can be adjusted according to the needs of the application.

According to one aspect of the present invention, the image identifying system 100 further includes an image output module 150, which is coupled to the recognition analysis module 140 and the fusion analysis module 180 to output the recognition results of the mucosal area 610 in the anatomical image and the mucosal position 660 in the functional image. The image output module 150 can be deployed as a proximal or remote system component within the image identifying system 100. If deployed proximally, the recognition results of the mucosal area 610 and mucosal position 660 can be output and stored in the storage device of a local computer system. If deployed remotely, the results can be output and stored in a cloud system or a data storage server system.

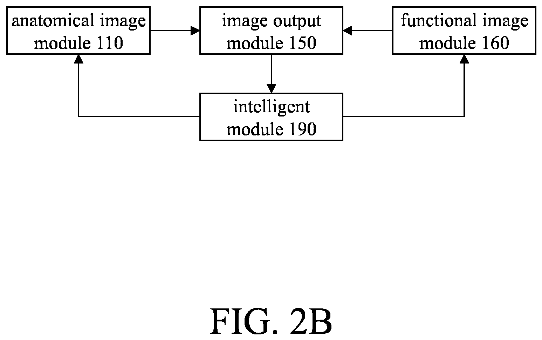

Please refer to FIG. 2B, according to one embodiment of the present invention, wherein the image identifying system 100 further includes an intelligent module 190, which is coupled with the image output module 150, the anatomical image module 110, and the functional image module 160. The intelligent module 190 comprises an artificial intelligence, monitoring the recognition results of the mucosal area 610 and mucosal position 660 made by the recognition analysis module 140 and the fusion analysis module 180. In the same way, the intelligent module 190 monitors the labeled results by taking the union of the mucosal area 610 and mucosal position 660 after the registration of the functional images and the anatomical images is made. When the intelligent module 190 determines that the mucosal area 610, mucosal position 660, and the union of the mucosal area 610 and mucosal position 660 meet the detection standards required for medical examination, the intelligent module 190 controls the image output module 150 to output the above result. However, when the intelligent module 190 determines that the accuracy and the precision of the calibration results for the mucosal area 610, the mucosal position 660, and the union of the mucosal area 610 and the mucosal position 660 does not meet the detection standards required for medical examination, the intelligent module 190 adjusts the operating mode or relevant parameters of the image identifying system 100, such as the numerical value of the voxel range Δ, until the medical examination meets the predefined detection standards. According to the embodiments of the present invention, the algorithms required for the operation of the intelligent module 190 primarily include, but are not limited to Supervised Learning Networks, Unsupervised Learning Networks, Hybrid Learning Networks, Associate Learning Networks, and Optimization Application Networks, as well as any combination of these algorithms.

According to one embodiment of the present invention, the image identifying system 100 may be implemented as software, hardware, or a combination thereof. If implemented as software, when its operational processes or system components are installed on a computer system, the computer system immediately becomes a tool for executing the present invention. If implemented as hardware, the image identifying system 100 includes commonly used processing chips, memory, cache memory, display devices, network communication interfaces, an operating system, and application programs, which are interconnected in a conventional manner to perform computing, caching, display, and data transmission. The system components of the present invention may also be a combination of hardware and software. Since the above-mentioned structure is conventionally known, further details will not be elaborated here.

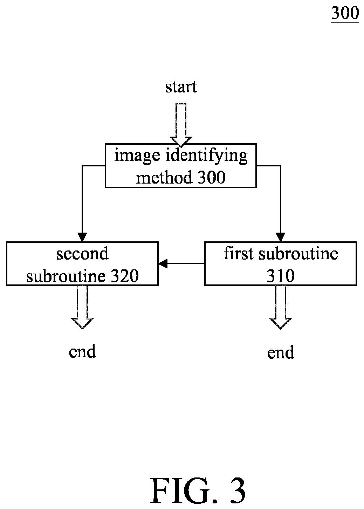

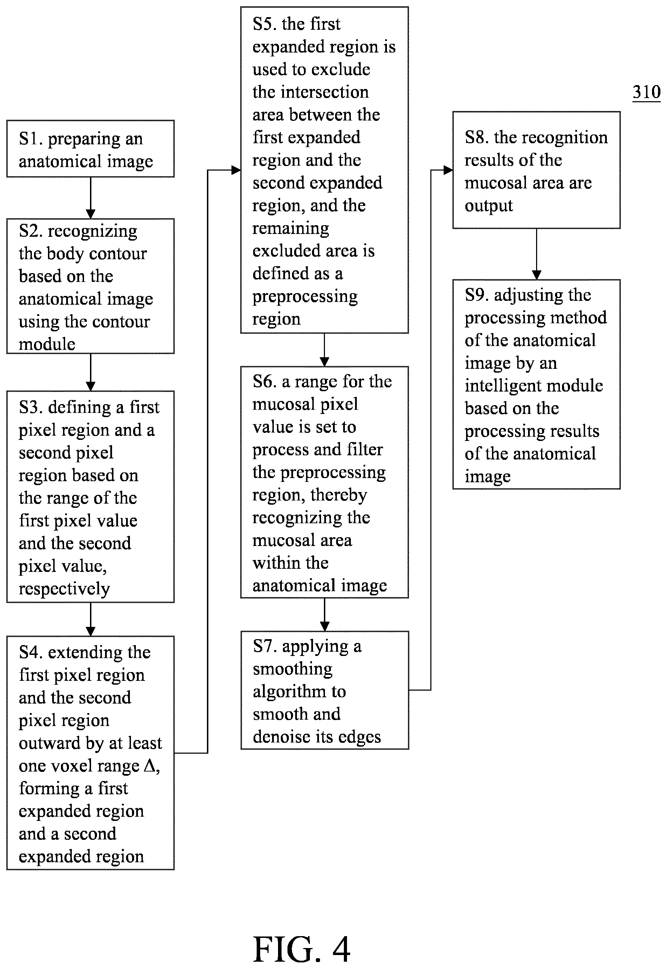

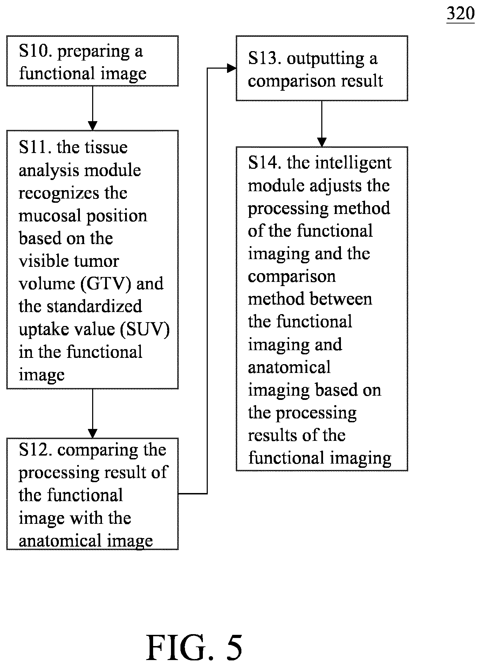

Please refer to FIG. 3 to 7. To achieve the aforementioned objective, the present invention provides an image identifying method 300, which includes various procedural steps within a first subroutine 310 and a second subroutine 320. The specific procedural steps include: In Step S1, preparing an anatomical image. In Step S2, recognizing the body contour based on the anatomical image by the contour module 120. In Step S3, defining a first pixel region 620 and a second pixel region 630 within the body contour based on the range of the first pixel value and the second pixel value via the pixel value module 130, respectively. In Step S4, the recognition analysis module 140 extends the first pixel region 620 and the second pixel region 630 outward within at least one voxel range Δ, forming a first expanded region 640 and a second expanded region 650. In Step S5, the first expanded region 640 is used to exclude the intersection area of the first expanded region 640 and the second expanded region 650, the remaining excluded area is defined as a preprocessing region. Additionally, in Step S6, a range for the mucosal pixel value is set to process and filter out the preprocessing region, thereby recognizing the mucosal area 610 within the anatomical image, wherein the voxel range Δ is between 0.2 mm and 10 mm. In Step S8, the recognition results of the mucosal area 610 are output. Similarly, it should be noted that the voxel range Δ of 0.2 mm to 10 mm mentioned in the above embodiment is merely an example. For applications involving oral mucosa, the voxel range Δ may be between 0.2 mm and 4 mm. The above description is only intended to illustrate the method of labeling oral mucosa in the present invention. Should there has a need to label the mucosa of other tissues, such as the intestines, stomach, uterus, foreskin, respiratory tract, vagina, or conjunctiva, an appropriate range can be defined based on the actual anatomical structure. It should notice that, the voxel range Δ in the overall method can be selected between 0.2 mm and 10 mm to accommodate different implementation sites, the persons skilled in the art can modify the method based on common biomedical knowledge after reading the description of the present invention.

According to one embodiment of the present invention, the image identifying method 300 further includes Step S7, in which the recognition results of the mucosal area 610 are processed by a smoothing unit 140A, which applies a smoothing algorithm to smooth and denoise its edges. This process eliminates the jagged edges of the mucosal area 610 in the image. The smoothing algorithm used by the smoothing unit 140A may be selected from, but is not limited to, Gaussian blur, bilateral filter, mean filter, median filter, guided filter, non-local means (NLM), anisotropic diffusion (Perona-Malik filter), curvature-driven diffusion (CDD), or a combination thereof. The selection of the smoothing algorithm can be based on factors such as computational resources, processing time, real-time computation requirements, the level of image detail to be preserved, and the quality of denoising.

According to one embodiment of the present invention, the image identifying method 300 further includes, in Step S9, an intelligent module adjusts the processing method of the anatomical image based on the processing results of the anatomical image, namely, the recognition results of the mucosal area 610. This adjustment may involve, for example, the modification of the voxel range Δ. The algorithms required for the operation of the intelligent module 190 primarily include, but are not limited to, supervised learning networks, unsupervised learning networks, hybrid learning networks, associative learning networks, optimization learning networks, and other algorithms, or a combination thereof.

According to one embodiment of the present invention, the image identifying method 300 further includes: In Step S10, preparing a functional image. In Step S11, the tissue analysis module 170 recognizes the mucosal position 660 based on the visible tumor volume (GTV) and the standardized uptake value (SUV) in the functional image. The recognition method involves subtracting the region of the visible tumor volume from the area on the functional image where the SUV value approximates that of the tumor tissue, thereby obtaining the mucosal position 660. In Step S12, after performing image registration between functional imaging and anatomical imaging, the functional imaging and anatomical imaging are compared based on the mucosal location 660 and mucosal region 610. In Step S13, the comparison results are output.

According to one embodiment of the present invention, the image identifying method 300 further includes: In Step S14, the intelligent module 190 monitors the recognition and comparison results of the mucosal area 610 and the mucosal position 660 via artificial intelligence. When the intelligent module 190 determines that the mucosal area 610, the mucosal position 660, and the label result obtained by taking the union of the mucosal area 610 and the mucosal position 660 meet the detection standards required for medical examination, the intelligent module 190 controls the image output module 150 to output the aforementioned results. However, when the intelligent module 190 determines that the accuracy and the precision of the label results for the mucosal area 610, the mucosal position 660, and the union of the mucosal area 610 and the mucosal position 660 does not meet the detection standards required for medical examination, the intelligent module 190 adjusts the operating mode or relevant parameters of the image identifying system 100, such as the numerical value of the voxel range Δ, until the medical examination meets the predefined detection standards. Similarly, in the embodiment of the present invention, the algorithms required for the operation of the intelligent module 190 primarily include, but are not limited to, supervised learning networks, unsupervised learning networks, hybrid learning networks, associative learning networks, optimization learning networks, and other algorithms, or a combination thereof.

In summary, the image identifying system and method proposed by the present invention aim to improve the accuracy and automation of medical image analysis. By utilizing anatomical images (such as CT images) for the label of mucosal or soft tissues in the human body, the invention addresses the issue of poor resolution of mucosal tissues in anatomical images by proposing a specific parameter standard. Moreover, the functional images (such as PET images) can also be considered during the analysis process, if necessary, wherein the advantages of PET in distinguishing mucosal tissues help assist in interpreting CT images and cross-validating the results of both, further enhancing the accuracy required for treatment planning and analysis. Therefore, in addition to being highly applicable in industry, the present invention also offers a novel system, method framework, and advanced performance, and is thus submitted for application. It should be noted that those skilled in the art, upon reading this invention, may make various modifications based on their expertise. However, these modifications still fall within the scope of protection sought by the appended patent claims.

## Claims

1. An image identifying system (100), **characterized in that**:
an anatomical image module (110), configured to read an anatomical image;
a contour module (120), configured to recognize a body contour based on said anatomical image;
a pixel value module (130), configured to set a first pixel value and a second pixel value to filter out a first pixel region (620) and a second pixel region (630) within the body contour; and
a recognition analysis module (140), configured to extend the first pixel region (620) and the second pixel region (630) outward by a voxel range to form a first expanded region (640) and a second expanded region (650), and configured to subtract the intersection area between the first expanded region (640) and the second expanded region (650) to form a preprocessing region,
wherein the pixel value module (130) sets a mucosal pixel value, such that the recognition analysis module (140) recognizes a mucosal area (610) within the preprocessing region, and the voxel range is between 0.2 mm and 10 mm.

2. The image identifying system (100) according to claim 1, wherein when applied to oral mucosa, the voxel range is set by the recognition analysis module (140) to be between 0.2 mm and 4 mm.

3. The image identifying system (100) according to claim 1, wherein the recognition analysis module (140) further includes a smoothing unit (140A) that performs smoothing and denoising via a smoothing algorithm, wherein the smoothing algorithm is selected from a Gaussian blur, a bilateral filter, a mean filter, a median filter, a guided filter, non-local means, an anisotropic diffusion, or a curvature-driven diffusion.

4. The image identifying system (100) according to claim 1, further comprising:
a functional image module (160), configured to read functional images;
a tissue analysis module (170), configured to recognize and label a mucosal position (660) based on said functional images; and
a fusion analysis module (180), configured to register said functional images and said anatomical image, taking union of the mucosal area (610) and the mucosal position (660) to form a label result.

5. The image identifying system (100) according to claim 4, wherein the tissue analysis module (170) recognizes and labels the mucosal position (660) in said functional images by visible tumor volume and standardized uptake value.

6. The image identifying system (100) according to claim 5, wherein the tissue analysis module (170) determines the mucosal position (660) by approximating the standardized uptake value to values of tumor tissues and subtracting a region of the visible tumor volume from said functional images.

7. The image identifying system (100) according to claim 4, further comprising an image output module (150) coupled to the recognition analysis module (140) and the fusion analysis module (180), wherein the image output module (150) outputs a recognition result and the mucosal position (660) of the mucosal area (610) to proximal end or remote end.

8. The image identifying system (100) according to claim 7, further comprising an intelligent module (190) coupled to the image output module (150), the anatomical image module (110), and the functional image module (160), wherein the intelligent module (190) monitors the recognition results of the mucosal area (610) and the mucosal position (660), as well as the label result obtained from the union of the mucosal area (610) and the mucosal position (660), and accordingly adjusts an operation mode of the image identifying system (100), wherein an algorithm of the intelligent module (190) is selected from a supervised learning network, an unsupervised learning network, a hybrid learning network, an associative learning network, an optimization learning network, or a combination thereof.

9. An image identifying method (300), **characterized in that**:
preparing an anatomical image;
recognizing a body contour from the anatomical image by a contour module (120);
setting a first pixel region (620) and a second pixel region (630) within the body contour based on a first pixel value and a second pixel value via a pixel value module (130);
expanding the first pixel region (620) and the second pixel region (630) outward by a voxel range through a recognition analysis module (140), thereby forming a first expanded region (640) and a second expanded region (650);
subtracting an intersection area of the first expanded region (640) and the second expanded region (650) from the first expanded region (640) to define a preprocessing region; and
setting a mucosal pixel value by the pixel value module (130) to recognize a mucosal area (610) within the preprocessing region, wherein the voxel range is between 0.2mm and 10mm.

10. The image identifying method (300) according to claim 9, wherein when applied to oral mucosa, the voxel range is set between 0.2mm and 4mm by the recognition analysis module (140).

11. The image identifying method (300) according to claim 9, further comprising smoothing and denoising edges of the mucosal area (610) via a smoothing unit (140A), wherein a smoothing algorithm of the smoothing unit (140A) is selected from a Gaussian blur, a bilateral filter, a mean filter, a median filter, a guided filter, a non-local means, an anisotropic diffusion, or a curvature-driven diffusion.

12. The image identifying method (300) according to claim 9, further comprising adjusting the voxel range based on a recognition result of the mucosal area (610) by an intelligent module (190).

13. The image identifying method (300) according to claim 9, further comprising:
preparing a functional image;
labeling a mucosal position (660) based on the functional image by a tissue analysis module (170); and
registering the functional image and the anatomical image, and taking union of the mucosal area (610) and the mucosal position (660) to form a label result via a fusion analysis module (180).

14. The image identifying method (300) according to claim 13, wherein a label reference for the mucosal position (660) is based on visible tumor volume and standard uptake value, the standard uptake value is set to a value approximating a tumor tissue through the tissue analysis module (170), in a designated area of the functional image, a region of the visible tumor volume is subtracted to derive the mucosal position (660).

15. The image identifying method (300) according to claim 14, further comprising registering the functional image with the anatomical image, and comparing the mucosal position (660) with the mucosal area (610).

## Amended claims

### Amended claims in accordance with Rule 137(2) EPC.

1. An image identifying system (100), comprising:
an anatomical image module (110), configured to read an anatomical image;
a contour module (120), configured to recognize a body contour based on said anatomical image;
a pixel value module (130), configured to set a first pixel value and a second pixel value to filter out a first pixel region (620) and a second pixel region (630) within the body contour; and
**characterized in that** the system further comprises:
a recognition analysis module (140), configured to extend the first pixel region (620) and the second pixel region (630) outward by a voxel range to form a first expanded region (640) and a second expanded region (650), and configured to subtract the intersection area between the first expanded region (640) and the second expanded region (650) to form a preprocessing region,
wherein the pixel value module (130) sets a mucosal pixel value, such that the recognition analysis module (140) recognizes a mucosal area (610) within the preprocessing region, and the voxel range is between 0.2 mm and 10 mm.

2. The image identifying system (100) according to claim 1, wherein when applied to oral mucosa, the voxel range is set by the recognition analysis module (140) to be between 0.2 mm and 4 mm.

3. The image identifying system (100) according to claim 1, wherein the recognition analysis module (140) further includes a smoothing unit (140A) that performs smoothing and denoising via a smoothing algorithm, wherein the smoothing algorithm is selected from a Gaussian blur, a bilateral filter, a mean filter, a median filter, a guided filter, non-local means, an anisotropic diffusion, or a curvature-driven diffusion.

4. The image identifying system (100) according to claim 1, further comprising:
a functional image module (160), configured to read functional images;
a tissue analysis module (170), configured to recognize and label a mucosal position (660) based on said functional images; and
a fusion analysis module (180), configured to register said functional images and said anatomical image, taking union of the mucosal area (610) and the mucosal position (660) to form a label result.

5. The image identifying system (100) according to claim 4, wherein the tissue analysis module (170) recognizes and labels the mucosal position (660) in said functional images by visible tumor volume and standardized uptake value.

6. The image identifying system (100) according to claim 5, wherein the tissue analysis module (170) determines the mucosal position (660) by approximating the standardized uptake value to values of tumor tissues and subtracting a region of the visible tumor volume from said functional images.

7. The image identifying system (100) according to claim 4, further comprising an image output module (150) coupled to the recognition analysis module (140) and the fusion analysis module (180), wherein the image output module (150) outputs a recognition result and the mucosal position (660) of the mucosal area (610) to proximal end or remote end.

8. The image identifying system (100) according to claim 7, further comprising an intelligent module (190) coupled to the image output module (150), the anatomical image module (110), and the functional image module (160), wherein the intelligent module (190) monitors the recognition results of the mucosal area (610) and the mucosal position (660), as well as the label result obtained from the union of the mucosal area (610) and the mucosal position (660), and accordingly adjusts an operation mode of the image identifying system (100), wherein an algorithm of the intelligent module (190) is selected from a supervised learning network, an unsupervised learning network, a hybrid learning network, an associative learning network, an optimization learning network, or a combination thereof.

9. An image identifying method (300), comprising:
preparing an anatomical image;
recognizing a body contour from the anatomical image by a contour module (120);
setting a first pixel region (620) and a second pixel region (630) within the body contour based on a first pixel value and a second pixel value via a pixel value module (130);
**characterized in that** the method further comprises:
expanding the first pixel region (620) and the second pixel region (630) outward by a voxel range through a recognition analysis module (140), thereby forming a first expanded region (640) and a second expanded region (650);
subtracting an intersection area of the first expanded region (640) and the second expanded region (650) from the first expanded region (640) to define a preprocessing region; and
setting a mucosal pixel value by the pixel value module (130) to recognize a mucosal area (610) within the preprocessing region, wherein the voxel range is between 0.2mm and 10mm.

10. The image identifying method (300) according to claim 9, wherein when applied to oral mucosa, the voxel range is set between 0.2mm and 4mm by the recognition analysis module (140).

11. The image identifying method (300) according to claim 9, further comprising smoothing and denoising edges of the mucosal area (610) via a smoothing unit (140A), wherein a smoothing algorithm of the smoothing unit (140A) is selected from a Gaussian blur, a bilateral filter, a mean filter, a median filter, a guided filter, a non-local means, an anisotropic diffusion, or a curvature-driven diffusion.

12. The image identifying method (300) according to claim 9, further comprising adjusting the voxel range based on a recognition result of the mucosal area (610) by an intelligent module (190).

13. The image identifying method (300) according to claim 9, further comprising:
preparing a functional image;
labeling a mucosal position (660) based on the functional image by a tissue analysis module (170); and
registering the functional image and the anatomical image, and taking union of the mucosal area (610) and the mucosal position (660) to form a label result via a fusion analysis module (180).

14. The image identifying method (300) according to claim 13, wherein a label reference for the mucosal position (660) is based on visible tumor volume and standard uptake value, the standard uptake value is set to a value approximating a tumor tissue through the tissue analysis module (170), in a designated area of the functional image, a region of the visible tumor volume is subtracted to derive the mucosal position (660).

15. The image identifying method (300) according to claim 14, further comprising registering the functional image with the anatomical image, and comparing the mucosal position (660) with the mucosal area (610).
